(19) Europäisches Patentamt
European Patent Office
Office européen des brevets

(11) EP 3 908 014 A1

(12) **EUROPEAN PATENT APPLICATION**
published in accordance with Art. 153(4) EPC

(43) Date of publication:
**10.11.2021 Bulletin 2021/45**

(21) Application number: **20735980.3**

(22) Date of filing: **03.01.2020**

(51) Int Cl.:
***H04W 4/44*** (2018.01)

(86) International application number:
**PCT/CN2020/070251**

(87) International publication number:
**WO 2020/140968 (09.07.2020 Gazette 2020/28)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **04.01.2019 CN 201910008487**

(71) Applicant: **Spreadtrum Communications (Shanghai) Co., Ltd.**
**Shanghai 201203 (CN)**

(72) Inventor: **DENG, Yun**
**Shanghai 201203 (CN)**

(74) Representative: **advotec.**
**Patent- und Rechtsanwaltspartnerschaft**
**Tappe mbB**
**Widenmayerstraße 4**
**80538 München (DE)**

(54) **DATA TRANSMISSION LINK MAINTENANCE METHOD, MAINTENANCE TRIGGERING METHOD AND DEVICE**

(57) The present disclosure provides a method and apparatus for data transmission link maintenance, and a maintenance triggering method and apparatus. The maintenance method includes: establishing a sidelink for transmitting vehicle-to-everything (V2X) service data, and performing communication between a first user equipment (UE) and a second UE over the sidelink; obtaining a first pathloss; obtaining a second pathloss; and maintaining a V2X transmission link when a relationship between the first pathloss and the second pathloss meets a trigger condition. The triggering method includes: establishing a sidelink; obtaining a first pathloss; obtaining a second pathloss; and triggering maintenance of a V2X transmission link when a relationship between the first pathloss and the second pathloss meets a trigger condition. The V2X transmission link is maintained when the relationship between the first pathloss and the second pathloss meets the trigger condition. The method and apparatus for data transmission link maintenance, and maintenance triggering method and apparatus in the embodiments of the present disclosure can improve communication performance and user experience.

Establish a sidelink for transmitting V2X service data and perform communication between A first UE and A second UE over the sidelink — S11

Obtain a first pathloss, the first pathloss includes a pathloss of the sidelink — S12

Obtain a second pathloss, the second pathloss includes a pathloss of a cell that serves the first UE — S13

Maintain a V2X transmission link when a relationship between the first pathloss and the second pathloss meets a trigger condition — S14

FIG. 3

**Description**

This patent application claims priority to Chinese Patent Application No. 201910008487.0 filed on January 4, 2019, the content of which is incorporated by reference herein in its entirety.

**TECHNICAL FIELD**

The present disclosure belongs to the field of wireless communication, and in particular, relates to a method for data transmission link maintenance, and a method for triggering maintenance and apparatus.

**BACKGROUND**

In Long Term Evolution (LTE), if user equipment (UE) uses transmission resources allocated by a cell that serves the UE to perform vehicle-to-everything (V2X) transmission, the UE cannot perform transmission based on maximum transmission power for the UE, but needs to consider impact on the cell and perform power control. Therefore, V2X transmission power is a smaller one of maximum transmission power of the UE at a current frequency and required transmission power calculated by the UE based on a pathloss of the cell.

Because feedback is not considered in LTE-based V2X transmission which involves only unidirectional transmission, the foregoing method can be used to calculate V2X transmission power. However, feedback needs to be considered in New Radio (NR) based V2X transmission which involves bidirectional transmission. A smaller one of a pathloss of a sidelink for bidirectional transmission and a pathloss, calculated by UE that performs bidirectional transmission, of a cell that serves the UE is generally used as transmission power of the UE. When a distance between two UEs that perform bidirectional transmission is relatively short, the pathloss of the sidelink is generally used as the transmission power of the UE.

However, the UE may move during the bidirectional transmission. During the movement of the UE, the pathloss of the sidelink may be greater than the pathloss of the cell that serves the UE. In this case, based on the foregoing calculation method, the pathloss of the cell that serves the UE is used as the transmission power of the UE. Consequently, the sidelink cannot be maintained, and the UE may be suddenly disconnected from the other UE. This greatly affects user experience.

**SUMMARY**

In view of this, the present disclosure provides a method and apparatus for data transmission link maintenance, and a method and apparatus for triggering maintenance of a V2X transmission link in time when a relationship between a first pathloss and a second pathloss changes, thereby ensuring a desirable transmission effect of the V2X transmission link and improving user experience.

According to a first aspect of the present disclosure, a method for data transmission link maintenance is provided. The method includes: establishing a sidelink for transmitting V2X service data, and performing communication between a first UE and a second UE over the sidelink; obtaining a first pathloss; obtaining a second pathloss; and maintaining a V2X transmission link in response to a relationship between the first pathloss and the second pathloss meeting a trigger condition.

In a possible implementation, the maintaining a V2X transmission link in response to a relationship between the first pathloss and the second pathloss meeting a trigger condition may specifically include: maintaining the V2X transmission link in response to the first pathloss being greater than the second pathloss by a first threshold; or maintaining the V2X transmission link in response to the first pathloss being less than the second pathloss by a second threshold.

In a possible implementation, the maintaining a V2X transmission link may specifically include: sending a first notification message to the second UE, such that the second UE maintains the V2X transmission link based on the first notification message; or sending a second notification message to a base station that serves the first UE to maintain the V2X transmission link; or adjusting transmission parameters to maintain the V2X transmission link.

In a possible implementation, the sending a second notification message to a base station that serves the first UE to maintain the V2X transmission link may specifically include: sending the second notification message to the base station to request to perform power compensation based on the first pathloss to implement V2X transmission; and in response to receiving a request approval message, performing power compensation based on the first pathloss to implement V2X transmission; or in response to receiving a request rejection message, adjusting the transmission parameters to maintain the V2X transmission link.

In a possible implementation, the adjusting a transmission parameter to maintain the V2X transmission link may specifically include: adjusting a modulation and coding scheme (MCS) to maintain the V2X transmission link; sending a feedback message to the second UE to maintain the V2X transmission link; selecting a link at a different carrier frequency to perform V2X transmission with the second UE to maintain the V2X transmission link; or instructing the second UE to release the sidelink.

In a possible implementation, the adjusting an MCS to maintain the V2X transmission link may specifically include: configuring a range of the MCS based on the relationship between the first pathloss and the second pathloss.

In a possible implementation, the sending a feedback message to the second UE to maintain the V2X transmission link may specifically include: sending a sidelink feedback message to the second UE to maintain the V2X transmission link, the sidelink feedback message is configured to indicate a status of the sidelink; or sending sidelink control information (SCI) to the second UE to maintain the V2X transmission link, the SCI is configured to indicate a status of the sidelink.

In a possible implementation, the sending a notification message in response to a relationship between the first pathloss and the second pathloss meeting a trigger condition may further include: sending the notification message in response to a difference between the first pathloss and the second pathloss reaching a third threshold; or sending the notification message in response to the difference between the first pathloss and the second pathloss reaching the third threshold and a duration exceeds a fourth threshold.

According to a second aspect of the present disclosure, a method for data transmission link maintenance is provided. The method is applied to a second UE that supports bidirectional V2X transmission. The method includes: receiving a first notification message sent by first UE, the first notification message is sent in response to a relationship between a first pathloss and a second pathloss meeting a trigger condition, and the first notification message is configured to indicate a status of a sidelink for V2X transmission; and maintaining a V2X transmission link based on the first notification message.

In a possible implementation, the maintaining a V2X transmission link based on the first notification message may specifically include: performing bidirectional V2X transmission with the first UE over the sidelink if the first notification message indicates that the sidelink supports bidirectional V2X transmission; or maintaining the V2X transmission link if the first notification message indicates that the sidelink does not support bidirectional V2X transmission.

In a possible implementation, the maintaining the V2X transmission link if the first notification message indicates that the sidelink does not support bidirectional V2X transmission may specifically include: sending to-be-transmitted data to the first UE immediately after receiving the first notification message; entering a transmission state of unidirectional V2X transmission to the first UE after receiving the first notification message; releasing the sidelink after receiving the first notification message; or switching to a link at a different carrier frequency to perform bidirectional V2X transmission with the first UE after receiving the first notification message.

According to a third aspect of the present disclosure, a method for triggering data transmission link maintenance is provided. The method includes: establishing a sidelink for transmitting V2X service data, and performing communication between first UE and second UE over the sidelink; obtaining a first pathloss; obtaining a second pathloss; and triggering maintenance of a V2X transmission link in response to a relationship between the first pathloss and the second pathloss meeting a trigger condition.

In a possible implementation, the triggering maintenance of a V2X transmission link in response to a relationship between the first pathloss and the second pathloss meeting a trigger condition may specifically include: triggering the maintenance of the V2X transmission link in response to the first pathloss being greater than the second pathloss by a first threshold; or triggering the maintenance of the V2X transmission link in response to the first pathloss being less than the second pathloss by a second threshold.

According to a fourth aspect of the present disclosure, an apparatus for data transmission link maintenance is provided. The apparatus includes: a sidelink establishment unit, configured to establish a sidelink for transmitting V2X service data and perform communication between first UE and second UE over the sidelink; a first obtaining unit, configured to obtain a first pathloss; a second obtaining unit, configured to obtain a second pathloss; and a maintenance unit, configured to maintain a V2X transmission link in response to a relationship between the first pathloss and the second pathloss meeting a trigger condition.

In a possible implementation, the maintaining a V2X transmission link in response to a relationship between the first pathloss and the second pathloss meets a trigger condition may specifically include: maintaining the V2X transmission link in response to the first pathloss being greater than the second pathloss by a first threshold; or maintaining the V2X transmission link in response to the first pathloss being less than the second pathloss by a second threshold.

In a possible implementation, the maintenance unit may be specifically configured to: send a first notification message to the second UE, such that the second UE maintains the V2X transmission link based on the first notification message; send a second notification message to a base station that serves the first UE to maintain the V2X transmission link; or adjust a transmission parameter to maintain the V2X transmission link.

In a possible implementation, the maintenance unit may be further configured to: send the second notification message to the base station to request to perform power compensation based on the first pathloss to implement V2X transmission; and in response to receiving a request approval message, perform power compensation based on the first pathloss to implement V2X transmission; or in response to receiving a request rejection message, adjust the transmission parameter to maintain the V2X transmission link.

In a possible implementation, the adjusting a transmission parameter to maintain the V2X transmission link may specifically include: adjusting an MCS to maintain the V2X transmission link; sending a feedback message to the second UE to maintain the V2X transmission link; selecting a link at a different carrier frequency to perform V2X transmission with the second UE to maintain the V2X transmission link; or instructing the second UE to release the sidelink.

In a possible implementation, the sending a notification message in response to a relationship between the first pathloss and the second pathloss meeting a trigger condition may further include: sending the notification message in response to a difference between the first pathloss and the second pathloss reaching a third threshold; or sending the notification message in response to the difference between the first pathloss and the second pathloss reaching the third threshold and a duration exceeds a fourth threshold.

According to a fifth aspect of the present disclosure, an apparatus for data transmission link maintenance is provided. The apparatus includes: a first notification message receiving unit, configured to receive a first notification message sent by first UE, the first notification message is sent in response to a relationship between a first pathloss and a second pathloss meeting a trigger condition, and is configured to indicate a status of a sidelink for V2X transmission; and a maintenance unit, configured to maintain a V2X transmission link based on the first notification message.

In a possible implementation, the maintenance unit may be specifically configured to: perform bidirectional V2X transmission with the first UE over the sidelink in a case that the first notification message indicates that the sidelink supports bidirectional V2X transmission; or maintain the V2X transmission link in a case that the first notification message indicates that the sidelink does not support bidirectional V2X transmission.

According to a sixth aspect of the present disclosure, an apparatus for triggering data transmission link maintenance is provided. The apparatus includes: a sidelink establishment unit, configured to establish a sidelink for transmitting V2X service data and perform communication between a first UE and a second UE over the sidelink; a first obtaining unit, configured to obtain a first pathloss; a second obtaining unit, configured to obtain a second pathloss; and a trigger unit, configured to trigger maintenance of a V2X transmission link in response to a relationship between the first pathloss and the second pathloss meeting a trigger condition.

In a possible implementation, the trigger unit may be specifically configured to: trigger the maintenance of the V2X transmission link in response to the first pathloss being greater than the second pathloss by a first threshold; or trigger the maintenance of the V2X transmission link in response to the first pathloss being less than the second pathloss by a second threshold.

According to a seventh aspect of the present disclosure, an apparatus for data transmission link maintenance is provided. The apparatus includes a processor and a memory configured to store an instruction executable by the processor. The processor is configured to perform the method according to the first aspect.

According to an eighth aspect of the present disclosure, an apparatus for data transmission link maintenance is provided. The apparatus includes a processor and a memory configured to store an instruction executable by the processor. The processor is configured to perform the method according to the second aspect.

According to a ninth aspect of the present disclosure, an apparatus for triggering data transmission link maintenance is provided. The apparatus includes a processor and a memory configured to store an instruction executable by the processor. The processor is configured to perform the method according to the third aspect.

According to a tenth aspect of the present disclosure, a non-volatile computer-readable storage medium storing a computer program instruction is provided. The method according to the first aspect is implemented when the computer program instruction is executed by a processor.

According to an eleventh aspect of the present disclosure, a non-volatile computer-readable storage medium storing a computer program instruction is provided. The method according to the second aspect is implemented when the computer program instruction is executed by a processor.

According to a twelfth aspect of the present disclosure, a non-volatile computer-readable storage medium storing a computer program instruction is provided. The method according to the third aspect is implemented when the computer program instruction is executed by a processor.

By obtaining the first pathloss and the second pathloss on the sidelink for transmitting the V2X service data, the maintenance of the V2X transmission link can be triggered in time when the relationship between the first pathloss and the second pathloss meets the trigger condition, to minimize losses caused by a failure to transmit data over the sidelink in time due to the change in the relationship between the first pathloss and second pathloss on the V2X transmission link, and improve user's communication experience.

According to the following detailed description of exemplary embodiments with reference to the accompanying drawings, other features and aspects of the present disclosure will become clear.

**BRIEF DESCRIPTION OF DRAWINGS**

The accompanying drawings included in the specification and constituting a part of the specification, together with the specification, illustrate exemplary embodiments, features, and aspects of the present disclosure, and are used to explain the principle of the present disclosure.

FIG. 1 is a diagram of a scenario for V2X data transmission according to an embodiment of the present disclosure.

FIG. 2 is a schematic diagram of an application example according to the present disclosure.

FIG. 3 is a flowchart of a method for data transmission link maintenance according to an embodiment of the present disclosure.

FIG. 4 is a flowchart of a method for data transmission link maintenance according to an embodiment of the present disclosure.

FIG. 5 is a flowchart of a method for data transmission link maintenance according to an embodiment of the present disclosure.

FIG. 6 is a flowchart of a method for data transmission link maintenance according to an embodiment of the present disclosure.

FIG. 7 is a flowchart of a method for triggering data transmission link maintenance according to an embodiment of the present disclosure.

FIG. 8 is a block diagram of an apparatus for data transmission link maintenance according to an embodiment of the present disclosure.

FIG. 9 is a block diagram of an apparatus for data transmission link maintenance according to an embodiment of the present disclosure.

FIG. 10 is a block diagram of an apparatus for triggering data transmission link maintenance according to an embodiment of the present disclosure.

FIG. 11 is a schematic diagram of an application example according to the present disclosure.

FIG. 12 is a schematic diagram of an application example according to the present disclosure.

FIG. 13 is a block diagram of an apparatus for data transmission link maintenance according to an embodiment of the present disclosure.

## DESCRIPTION OF EMBODIMENTS

Various exemplary embodiments, features, and aspects of the present disclosure will be described in detail below with reference to the drawings. The same reference numerals in the drawings indicate elements with the same or similar functions. Although various aspects of the embodiments are shown in the drawings, unless otherwise noted, the drawings are not necessarily drawn to scale.

The dedicated word "exemplary" here means "serving as an example, embodiment, or illustration". Any embodiment described herein as "exemplary" need not be construed as being superior to or better than other embodiments.

In addition, to better illustrate the present disclosure, numerous specific details are given in the following specific embodiments. Those skilled in the art should understand that the present disclosure can also be implemented without some specific details. In some embodiments, the methods, means, elements, and circuits well-known to those skilled in the art are not described in detail in order to highlight the subject matter of the present disclosure.

In 3rd Generation Partnership Project (3GPP) Release 12, proximity-based services (ProSe) direct communication or sidelink communication is introduced into LTE. Direct communication between different UEs, such as UE A and UE B (or multiple UEs) can be implemented over a PC5 interface. The PC5 interface is a direct interface between UEs.

There are two resource allocation modes during communication between UEs: scheduling resource allocation and automatic resource selection. In the former mode, a base station uses dedicated signaling to configure resources. In the latter mode, a base station can use system messages or radio resource control (RRC) signaling to provide the UEs with a resource pool for direct communication, and the UEs select resources for direct communication from the resource pool. If a transmitting UE is not within a network coverage area, the UE adopts the automatic resource selection mode and selects resources for direct communication from a preconfigured resource pool.

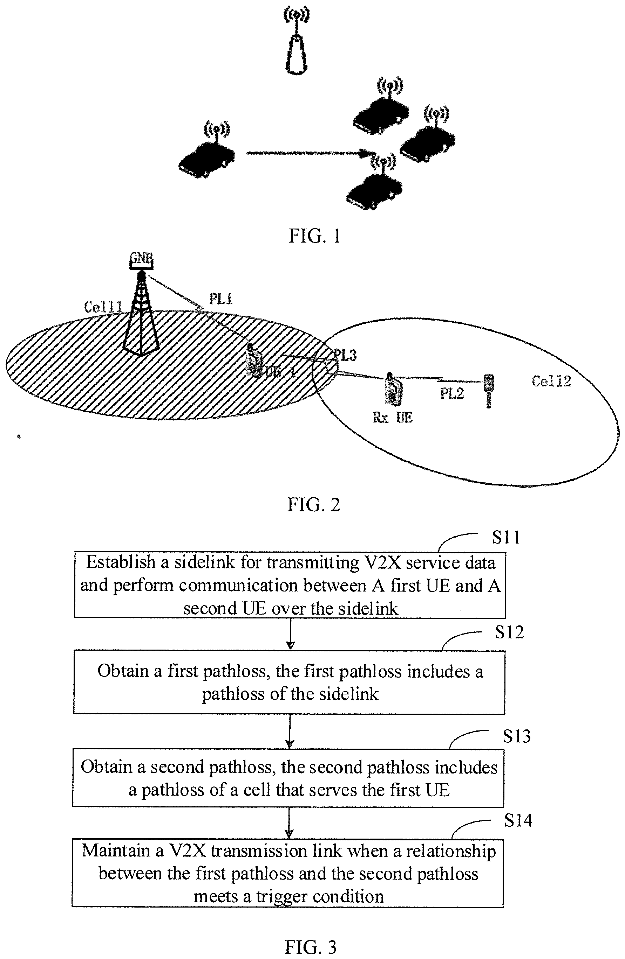

Based on direct communication, 3GPP also supports V2X. FIG. 1 is a diagram of a scenario for V2X data transmission according to an embodiment of the present disclosure. As shown in FIG. 1, specific UE can send V2X messages to a plurality of UEs within a network coverage area. It should be noted that the receiving UEs and transmitting UE may not be within the network coverage area, or part of the UEs may be within the network coverage area.

Currently, 3GPP is studying the introduction of V2X into a fifth generation (5G) system. This is because the 5G system can provide higher bandwidth and lower latency to better meet service requirements of V2X. 3GPP has agreed that V2X service data can be transmitted in unicast, groupcast, or broadcast mode in the 5G system. If transmitting UE transmits data in unicast or groupcast mode, feedback can be introduced.

In LTE, if UE uses transmission resources configured by a cell that serves the UE to perform V2X transmission, the UE cannot perform transmission based on maximum transmission power for the UE, but needs to consider impact on the cell and perform power control.

Transmission power of transmitting UE on a physical sidelink shared channel (PSSCH) is calculated by using the following formula:

$$P_{PSSCH} = 10\log_{10}\left(\frac{M_{PSSCH}}{M_{PSSCH} + 10^{\frac{3}{10}} \times M_{PSCCH}}\right)$$

$$+ \min\left\{P_{CMAX}, 10\log_{10}\left(M_{PSSCH} + 10^{\frac{3}{10}} \times M_{PSCCH}\right) + P_{O\_PSSCH,3} + \alpha_{PSSCH,3} \cdot PL\right\},$$

where $P_{PSSCH}$ represents the transmission power of the transmitting UE on the PSSCH, $M_{PSSCH}$ represents a number of resource blocks (RBs) of the PSSCH used by the transmitting UE, $M_{PSCCH}$ represents a number of RBs of a physical sidelink control channel (PSCCH) used by the transmitting UE, $P_{CMAX}$ represents maximum transmission power of the transmitting UE at a current frequency, $PL$ represents a pathloss of a cell that serves the transmitting UE, and $P_{O\_PSSCH,3}$ and $\alpha_{PSSCH,3}$ are parameters configured by a higher layer. The UE uses transmission resources provided by the cell to perform V2X transmission. The pathloss, calculated by using the prior art, is a difference between transmission power and receiving power. The UE calculates the pathloss of the cell by using a reference signal sent by the cell. Because feedback is not considered in LTE-based V2X transmission which involves only unidirectional transmission, the foregoing power calculation formula is adopted. It can be learned from the foregoing formula that without considering the first item in the formula, when the UE performs V2X transmission, the V2X transmission power is a smaller one of the maximum transmission power of the UE at the current frequency and required transmission power calculated by the UE based on the pathloss of the cell, namely, power compensation performed based on the pathloss of the cell.

However, feedback needs to be considered in NR-based V2X transmission. In this case, bidirectional transmission is performed. FIG. 2 is a schematic diagram of an application example according to the present disclosure. In a scenario shown in FIG. 2, UE 1 is within a coverage area of a cell Cell1, Rx UE is within a coverage area of a cell Cell2, a pathloss of the cell Cell1 measured by the UE 1 is PL1, and a pathloss of the cell Cell2 measured by the Rx UE is PL2. A pathloss of a sidelink between the UE 1 and the Rx UE is PL3. Assuming that both UEs send reference signals, and can infer the pathloss PL3 of the sidelink based on detection of the reference signals and transmission power of the reference signals.

During bidirectional transmission, the UE 1 transmits V2X data to the Rx UE, and feedback is required. The Rx UE also needs to send a signal to the UE 1. When a distance between the two UEs is very short, power compensation needs to be performed for the V2X transmission based only on the pathloss PL3 of the sidelink. For example, transmission power is equal to a sum of the pathloss and target power expected by a receive end, and is expressed by using a formula similar to that in LTE, and a compensation scale factor can be introduced for the pathloss. This can ensure accuracy of data transmission and reduce interference to other users. Therefore, the UE 1 or the Rx UE needs to perform power compensation based only on min(SL PL, Uu PL) during transmission, where SL PL is the pathloss of the sidelink, and Uu PL is a pathloss, measured by transmitting UE, of a cell where the transmitting UE is located. Therefore, the UE 1 performs power compensation based on min(PL3, PL1) during transmission. The Rx UE performs power compensation based on min(PL3, PL2) during transmission.

During V2X transmission between the UE 1 and the Rx UE, there may be two possible situations. The UE 1 and the Rx UE are relatively close at first, and the UE 1 in idle state in the cell Cell1 is performing bidirectional V2X transmission with the Rx UE in the cell Cell2. During initial establishment of a bidirectional connection, one of the two UEs can initiate a connection request to the other UE, and start V2X transmission after receiving a response. Alternatively, the two UEs may use default parameters to directly perform V2X transmission. The sidelink between the two UEs remains smooth. In an initial period, the distance between the UE 1 and the Rx UE is relatively short, and the following conditions are met: PL3 < PL1 and PL3 < PL2. Therefore, power compensation is performed based on PL3 for V2X transmission between the UE 1 and the Rx UE. After a period of time, the Rx UE gradually moves to a center of the cell Cell2, and PL2 gradually becomes smaller, causing PL2 to gradually approach PL3. If no new mechanism is introduced, when PL2 < PL3, the Rx UE can perform power compensation based only on min(PL2, PL3), namely, PL2, for V2X transmission. In this case, V2X data sent by the Rx UE to the UE 1 may not be received by the UE 1, and a sudden interruption of the sidelink may be caused. The sidelink between the UE 1 and the Rx UE is originally smooth, but the Rx UE suddenly detects that PL2 < PL3. Because the pathloss is related to the distance, and a sudden change of a position of the Rx UE may cause drastic changes in PL2 and PL3, and further cause a sudden interruption of the sidelink.

When any of the foregoing situations occurs, the current sidelink may not be maintained. If no new mechanism is introduced, it is likely to cause the two UEs that perform V2X transmission to suddenly lose connection. This greatly affects user experience.

To resolve the foregoing problems, embodiments of the present disclosure provides an application example of a method for data transmission link maintenance. As shown in FIG. 2, in this example, the Rx UE continuously detects the first pathloss PL3 of the sidelink between the Rx UE and the UE 1 and the second pathloss PL2 of the cell Cell2 where the Rx UE is located during movement. When PL3 is greater than PL2 by a first threshold (which is set to - 2 dB in this application example), the Rx UE sends a notification message to maintain the V2X transmission link.

FIG. 3 is a flowchart of a method for data transmission link maintenance according to an embodiment of the present disclosure. As shown in FIG. 3, the method may include the following steps:

S11: Establish a sidelink for transmitting V2X service data and perform communication between first UE and second UE over the sidelink;

S12: Obtain a first pathloss, the first pathloss may include a pathloss of the sidelink;

S13: Obtain a second pathloss, the second pathloss may include a pathloss of a cell that serves the first UE;

S14: Maintain a V2X transmission link when a relationship between the first pathloss and the second pathloss meets a trigger condition.

The sidelink may be a unidirectional sidelink or a bidirectional sidelink. If the sidelink is a unidirectional sidelink, the second UE can perform unidirectional communication with the first UE over the sidelink without feedback. If the sidelink is a bidirectional sidelink, the first UE and the second UE can perform bidirectional communication over the sidelink with feedback. The pathloss in the foregoing steps can also be referred to as PL for short.

The sidelink may be established by using default parameters if data transmission exists. Alternatively, the sidelink may be established between the first UE and the second UE by using PC5 RRC signaling, and direct data transmission is performed after signaling interaction. An entity for establishing the sidelink is not specifically limited. The establishment of the sidelink may be initiated by the first UE or the second UE.

The first UE may simultaneously communicate with one or more UEs. The second UE in this embodiment is not specifically limited. UE that currently communicates with the first UE to transmit the V2X service data may be considered as the second UE.

The first pathloss may be considered as the pathloss of the sidelink, namely, a pathloss that occurs when the first UE communicates with the second UE over the sidelink. The second pathloss may be considered as the pathloss of the cell that serves the first UE, namely, a pathloss of the cell measured when the first UE uses transmission resources provided by the cell to perform transmission. The method for obtaining the first pathloss and the second pathloss is also not specifically limited. In an example, the first pathloss and the second pathloss may be obtained by the first UE through measurement. The implementation form in which the relationship between the first pathloss and the second pathloss meets the trigger condition is also not limited. The trigger condition may be met with a slow or sudden change in the first pathloss and the second pathloss.

In a possible implementation, maintaining the V2X transmission link when the relationship between the first pathloss and the second pathloss meets the trigger condition may include sending a notification message. The entity to which the notification message is sent is not limited, and may be the second UE or a base station in the cell that serves the first UE. The entity for maintaining the V2X transmission link is also not limited, and may be the first UE, the second UE, or the base station in the cell that serves the first UE. The method for maintaining the V2X transmission link is also not limited. The V2X transmission link may be maintained by maintaining the sidelink for transmitting the V2X service data, or discarding the sidelink and selecting a link at another carrier frequency to transmit the V2X service data.

In a possible implementation, step S14 of maintaining the V2X transmission link when the relationship between the first pathloss and the second pathloss meets the trigger condition may be maintaining the V2X transmission link when the first pathloss is greater than the second pathloss by a first threshold. In an example, the sidelink is in a bidirectional V2X transmission state. To maintain the bidirectional V2X transmission state, the first pathloss of the sidelink needs to be kept less than the second pathloss of the cell that serves the first UE whenever possible. In this case, the trigger condition may be that the first pathloss is greater than the second pathloss by the first threshold. This prevents the first pathloss from exceeding the second pathloss so much that the bidirectional V2X transmission state of the sidelink cannot be maintained. The setting of the first threshold is not specifically limited and can be flexibly selected based on actual situations. The first threshold may be set to a positive value or a negative value. If the first threshold is set to a negative value, the trigger condition is a warning condition. In this case, the maintenance of the V2X transmission link is triggered when the first pathloss is about to be greater than the second pathloss to avoid the situation that bidirectional V2X transmission cannot be normally performed whenever possible. The first threshold may alternatively be set to 0. If the first threshold is set to 0, the trigger condition is that the pathloss of the sidelink is greater than the pathloss of the cell that serves the first UE. In this case, the maintenance of the V2X transmission link is triggered immediately after the first pathloss becomes greater than the second pathloss. In an example, the first threshold may be set to -5 dB. In an example, the first threshold may be set to -2 dB. In an example, the first threshold may be set to -3 dB. In an example, the first threshold may be set to 2 dB. In an example, the first threshold may be set to 5 dB.

In a possible implementation, maintaining the V2X transmission link when the relationship between the first pathloss and the second pathloss meets the trigger condition may be maintaining the V2X transmission link when the first pathloss is less than the second pathloss by a second threshold. In an example, the sidelink is in a unidirectional V2X transmission state. In this case, the second UE performs unidirectional V2X data transmission to the first UE over the sidelink. The first UE may expect to send data or feedback data to the second UE. As receiving UE, the first UE cannot send data, or data sent by the first UE cannot reach the second UE. It indicates that the first pathloss may be greater than the second pathloss. The first UE may perform power compensation based on the second pathloss. In this case, the trigger condition may be that the first pathloss is less than the second pathloss by the second threshold. The maintenance of the V2X transmission link can be triggered in time when the first pathloss is less than the second pathloss, such that the first UE can also serve as transmitting UE to send data to the second UE to implement bidirectional V2X data transmission. The setting of the second threshold is also not specifically limited and can be flexibly selected based on actual situations. The second threshold may be set to a positive value or a negative value. If the second threshold is set to a negative value, the trigger condition is a preparatory condition. In this case, the maintenance of the V2X transmission link is triggered when the first pathloss is about to be less than the second pathloss, such that the first UE can enter a bidirectional V2X data transmission state as soon as possible. The second threshold may alternatively be set to 0. If the second threshold is set to 0, the trigger condition is that the pathloss of the sidelink is less than the pathloss of the cell that serves the first UE. In this case, the maintenance of the V2X transmission link is triggered immediately after the first pathloss becomes less than the second pathloss, such that the first UE can serve as transmitting UE to perform V2X data transmission to the second UE. In an example, the second threshold may be set to -5 dB. In an example, the second threshold may be set to -2 dB. In an example, the second threshold may be set to -3 dB. In an example, the second threshold may be set to 2 dB. In an example, the second threshold may be set to 5 dB.

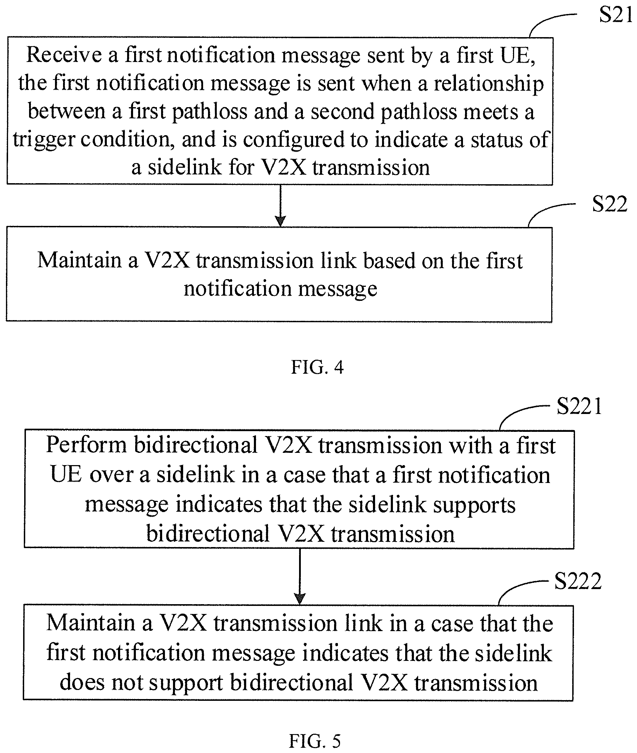

In a possible implementation, the entity for maintaining the V2X transmission link may be the second UE. The first UE may send a first notification message to the second UE, such that the second UE maintains the V2X transmission link based on the first notification message. FIG. 4 is a flowchart of an optional method for data transmission link maintenance according to an embodiment of the present disclosure. As shown in FIG. 4, in a possible implementation, a process of maintaining a data transmission link by second UE may specifically include the following steps:

S21: Receive a first notification message sent by first UE, the first notification message is sent when a relationship between a first pathloss and a second pathloss meets a trigger condition, and is used to indicate a status of a sidelink for V2X transmission;

S22: Maintain a V2X transmission link based on the first notification message.

In a possible implementation, a manner in which the second UE maintains the V2X transmission link based on the first notification message can be flexibly adjusted based on the sidelink. FIG. 5 is a flowchart of an optional method for data transmission link maintenance according to an embodiment of the present disclosure. As shown in FIG. 5, step S22 may specifically include the following steps:

S221: Perform bidirectional V2X transmission with the first UE over the sidelink if the first notification message indicates that the sidelink supports bidirectional V2X transmission;

S222: Maintain the V2X transmission link if the first notification message indicates that the sidelink does not support bidirectional V2X transmission.

In an example, unidirectional V2X data transmission may be originally performed over the sidelink. In this case, the trigger condition for sending the first notification message may be that the first pathloss is less than the second pathloss by a second threshold. A pathloss of the sidelink may be less than a pathloss of a cell that serves the first UE. The sidelink may change from supporting unidirectional V2X transmission to supporting bidirectional V2X transmission. The second UE can still normally perform unidirectional V2X transmission to the first UE over the sidelink. Therefore, the first notification message may indicate that the sidelink supports bidirectional V2X transmission or directly indicate that the first pathloss is less than the second pathloss by the second threshold. When the second UE receives the first notification message, the second UE may enter a state of performing bidirectional V2X transmission with the first UE over the sidelink.

In an example, bidirectional V2X data transmission may be performed over the sidelink. In this case, the trigger condition for sending the first notification message may be that the first pathloss is greater than the second pathloss by a first threshold. The pathloss of the sidelink may be greater than the pathloss of the cell that serves the first UE. The sidelink may change from supporting bidirectional V2X transmission to supporting unidirectional V2X transmission. The first UE may no longer be able to send data or feedback data to the second UE. Therefore, the first notification message may indicate that the sidelink may no longer be able to support bidirectional V2X transmission or directly indicate that the first pathloss is greater than the second pathloss by the first threshold. When the second UE receives the first notification message, the second UE may take corresponding measures to maintain the V2X transmission link.

In a possible implementation, there may be various forms of the manner in which the second UE maintains the V2X transmission link when the second UE receives the first notification message that indicates that the sidelink does not support bidirectional V2X transmission. In an example, the second UE may maintain the V2X transmission link in the following manner. The second UE sends to-be-transmitted data to the first UE immediately after receiving the first notification message. When the second UE receives the first notification message, the sidelink may still be able to support bidirectional V2X transmission. In this case, the second UE may obtain transmission resources and transmit the to-be-transmitted data to the first UE as soon as possible. If the to-be-transmitted data includes data that requires feedback, the second UE may receive feedback data from the first UE because the sidelink may still be able to support bidirectional V2X transmission. In an example, the second UE may maintain the V2X transmission link in the following manner: After receiving the first notification message, the second UE enters a state of performing unidirectional V2X transmission to the first UE, that is, gives up bidirectional V2X transmission with the first UE, switches to unidirectional V2X transmission to ensure that messages can be normally sent to the first UE, and does not expect feedback messages. In an example, the second UE may maintain the V2X transmission link in the following manner: After receiving the first notification message, the second UE releases the sidelink to avoid wasting resources for communication over the sidelink that does not support bidirectional V2X transmission and save resources as much as possible. In an example, the second UE may maintain the V2X transmission link in the following manner: after receiving the first notification message, the second UE switches to a link at a different carrier frequency to perform bidirectional V2X transmission with the first UE. If the second UE finds that the current sidelink may no longer be able to support bidirectional V2X transmission, the second UE may detect current transmitting frequencies. If the second UE finds that there is another frequency at which the second UE can perform bidirectional V2X transmission with the first UE, the second UE notifies the first UE to switch to the another frequency for communication. When the second UE detects each transmitting frequency, in addition to detecting whether there are transmission resources at the frequency for bidirectional V2X transmission, the second UE may detect whether the sidelink at the frequency is suitable for V2X transmission. The manner in which the second UE notifies the first UE to switch to another frequency is not limited. In an example, the second UE may use RRC signaling on the current sidelink to notify the first UE to switch to another frequency.

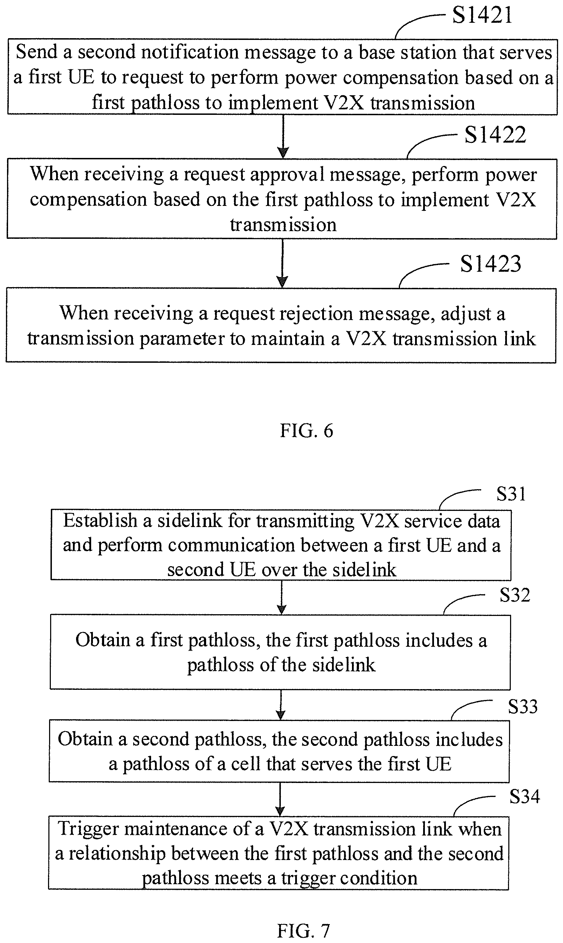

In a possible implementation, the entity for maintaining the V2X transmission link may be a base station that serves the first UE or the first UE. The first UE may send a second notification message to the base station that serves the first UE to notify that the first pathloss is less than the second pathloss by the second threshold, or request the base station to allow the first UE to perform power compensation for sidelink transmission based on the first pathloss, and determine, based on feedback from the base station, an entity for ultimately maintaining the V2X transmission link. Alternatively, the first UE may not send a request message to the base station, but directly maintain the V2X transmission link by adjusting a transmission parameter. FIG. 6 is a flowchart of an optional method for data transmission link maintenance according to an embodiment of the present disclosure. As shown in FIG. 6, step S14 may specifically include the following steps:

> S1421: Send the second notification message to the base station to request to perform power compensation based on the first pathloss to implement V2X transmission;
> S1422: When receiving a request approval message, perform power compensation based on the first pathloss to implement V2X transmission;
> S1423: When receiving a request rejection message, adjust the transmission parameter to maintain the V2X transmission link.

In an example, unidirectional V2X transmission may be originally performed over the sidelink, and the first pathloss may be greater than the second pathloss. The first UE expects to perform bidirectional V2X transmission with the second UE. As the first pathloss and the second pathloss change, the trigger condition may be met. That is, the first pathloss is less than the second pathloss by the second threshold. If the second threshold is a positive value, the first pathloss may be less than the second pathloss, and the first UE may perform power compensation based on the first pathloss even if the first UE does not send the second notification message to the base station, to enter the bidirectional V2X transmission state. If the second threshold is a non-positive value, the first pathloss may be greater than or equal to the second pathloss, and the first UE cannot directly perform power compensation based on the first pathloss, and needs to send the second notification message to the base station to request to perform power compensation based on the first pathloss. If the base station approves the request of the first UE, the sidelink can enter the bidirectional V2X transmission state as soon as possible to implement the maintenance of the V2X transmission link. If the base station rejects the request of the first UE, the first UE may properly adjust the transmission parameter to maintain the V2X transmission link, to enter the bidirectional V2X transmission state as soon as possible, or may not adjust the transmission parameter and wait for the first pathloss to further change to be less than the second pathloss to enter the bidirectional V2X transmission state.

In an example, bidirectional V2X transmission may be originally performed over the sidelink, and the first pathloss may be less than the second pathloss. The first UE and the second UE normally perform bidirectional communication with feedback. As the first pathloss and the second pathloss change, the trigger condition may be met. That is, the first pathloss is greater than the second pathloss by the first threshold. If the first threshold is a non-negative value, the first pathloss may be greater than the second pathloss, and the sidelink may no longer be able to support bidirectional V2X transmission. The first UE may send a request message to the base station to request the base station to allow the first UE to perform power compensation based on the first pathloss, such that when the first pathloss is greater than the second pathloss, the sidelink may support bidirectional V2X transmission. If the base station approves the request of the first UE, even if the pathlosses further change and the first pathloss continues to be greater than the second pathloss, the bidirectional V2X transmission between the first UE and the second UE can still be maintained, and the V2X transmission link is maintained. If the base station rejects the request of the first UE, the sidelink may no longer be able to support bidirectional V2X transmission. The first UE can properly adjust the transmission parameter to maintain the V2X transmission link. If the second threshold is a negative value, the first pathloss may be less than the second pathloss, such that the first UE can still maintain bidirectional V2X transmission with the second UE, but may be about to enter a situation where the bidirectional transmission cannot be continued. The first UE may send the second notification message to the base station to request to perform power compensation based on the first pathloss. If the base station approves the request of the first UE, even if the first pathloss subsequently changes to be greater than the second pathloss, bidirectional V2X transmission can still be perform between the first UE and the second UE. If the base station rejects the request of the first UE, the first UE can appropriately adjust the transmission parameter to maintain the V2X transmission link, to avoid the situation where the bidirectional V2X transmission cannot be continued due to changes in the pathlosses.

In an example, when the first UE sends the second notification message to the base station to notify that the relationship between the first pathloss and the second pathloss meets the trigger condition or request to perform power compensation based on the first pathloss, the base station may indicate that the first UE is allowed to perform power compensation based on the first pathloss to transmit V2X data; or configure dedicated transmission resources for the first UE, such that the first UE can use higher transmission power to perform V2X transmission. The latter one can also be interpreted as the base station approves the request of the first UE.

In a possible implementation, the first UE may directly release the current sidelink, or adjust the transmission parameter to maintain the V2X transmission link. There may be various implementation forms of a manner in which the first UE adjusts the transmission parameter to maintain the V2X transmission link. In an example, the first UE may adjust the transmission parameter to maintain the V2X transmission link in the following manner: The first UE adjusts an MCS to maintain the V2X transmission link. The method for adjusting the MCS is not specifically limited, and can be flexibly adjusted based on actual situations. In an example, MCS ranges in different pathloss scenarios may be configured over a network. The specific configuration method over the network is not limited and can be flexibly selected based on actual situations. In an example, the MCS range may be configured by using a system message. In an example, the MCS range may be configured by using dedicated signaling. A correspondence between the MCS range and the pathloss scenario is also not limited. In an example, the MCS range may be configured based on the relationship between the first pathloss and the second pathloss. Correspondences between different pathloss scenarios and the MCS ranges may be as follows: when the second pathloss is greater than the first pathloss, an MCS range 1 is configured for the PSSCH, and specific range values are not limited herein. If the second pathloss is less than the first pathloss, an MCS range 2 is configured for the PSSCH, and specific range values are not limited herein.

In an example, the first UE may adjust the transmission parameter to maintain the V2X transmission link in the following manner: the first UE sends a feedback message to the second UE to maintain the V2X transmission link. The form of the feedback message is not specifically limited, provided that the feedback message can be used to indicate a status of the sidelink. In an example, the feedback message is a sidelink feedback message. Therefore, the first UE may send the sidelink feedback message to the second UE to maintain the V2X transmission link. The sidelink feedback message is used to indicate the status of the sidelink (which may indicate that the sidelink meets the trigger condition). In an example, the feedback message may be SCI. Therefore, the first UE may send the SCI to the second UE to maintain the V2X transmission link. The SCI is used to indicate the status of the sidelink.

In an example, the first UE may adjust the transmission parameter to maintain the V2X transmission link in the following manner: the first UE selects a link at a different carrier frequency to perform V2X transmission with the second UE to maintain the V2X transmission link. The manner in which the first UE selects the link at the different carrier frequency is not limited. In an example, the first UE may detect each transmitting frequency of the second UE. If the first UE finds that there is a sidelink that supports bidirectional V2X transmission at another frequency, the first UE notifies the second UE over the sidelink at the another frequency that bidirectional V2X transmission cannot be continued over the original sidelink. A manner in which the first UE sends a notification to the second UE over the sidelink is not limited. In an example, the first UE sends the notification to the second UE by using RRC signaling. When the first UE sends the notification by using the RRC signaling, the notification may indicate a frequency at which transmission is performed when the relationship between the first pathloss and the second pathloss meets the trigger condition, it is assumed that the RRC signaling can be transmitted at any carrier frequency in this example.

In an example, the first UE may adjust the transmission parameter to maintain the V2X transmission link in the following manner: the first UE instructs the second UE to release the sidelink.

It should be noted that the three maintenance processes in which the first UE maintains the V2X transmission link, the second UE maintains the V2X transmission link, and the base station maintains the V2X transmission link may be simultaneously performed. A number and combination of specific parallel maintenance processes are not limited. In an example, when the first UE sends the first notification message to the second UE, and the second UE maintains the V2X transmission link after receiving the first notification message, the first UE may simultaneously maintain the V2X transmission link by adjusting the transmission parameter. In an example, when the second UE sends transmission information to the first UE as soon as possible after receiving the first notification message, the first UE may simultaneously adjust the MCS range based on the relationship between the first pathloss and the second pathloss.

In a possible implementation, the notification message is sent when the relationship between the first pathloss and the second pathloss meets the trigger condition, or a difference between the first pathloss and the second pathloss reaches a third threshold. In an example, a value and positive or negative of the third threshold are not limited. In this example, whether the first UE and the second UE originally perform unidirectional V2X transmission or bidirectional V2X transmission is no longer considered. Regardless of an original communication status, if the difference between the first pathloss and the second pathloss reaches the third threshold, that is, the first pathloss may be greater or less than the second pathloss, it is considered that a status of the V2X transmission link between the first UE and the second UE may change. In this case, the maintenance of the V2X transmission link may be triggered. The entity for maintaining the V2X transmission link and the specific maintenance method are selected based on actual situations. Reference may be made to the maintenance entity and method mentioned in the foregoing descriptions, and details are not described herein again. In an example, if the original communication status between the first UE and the second UE is not considered, the maintenance of the V2X transmission link is directly triggered based on the relationship between the first pathloss and the second pathloss. Because the first pathloss and the second pathloss may jitter, such a triggering method may increase instability of the V2X transmission link. Therefore, in this example, to reduce jitters, a measurement trigger time TimeToTrigger is introduced. The first UE needs to measure that the difference between the first pathloss and the second pathloss reaches the third threshold, and a duration is greater than or equal to the fourth threshold, namely, the specified measurement trigger time, and then the first UE can send a notification message to maintain the V2X transmission link. The specific maintenance method is not repeated herein. The setting of the measurement trigger time, namely, the fourth threshold, is not specifically limited, and can be flexibly selected based on actual situations.

FIG. 7 is a flowchart of a method for triggering data transmission link maintenance according to an embodiment of the present disclosure. As shown in FIG. 7, in a possible implementation, the method may include the following steps:

S31: Establish a sidelink for transmitting V2X service data and perform communication between first UE and second UE over the sidelink;
S32: Obtain a first pathloss;
S33: Obtain a second pathloss;
S34: Trigger maintenance of a V2X transmission link when a relationship between the first pathloss and the second pathloss meets a trigger condition.

The sidelink, the first pathloss, the second pathloss, and the trigger condition in the foregoing steps are the same as the related content mentioned in the method for data transmission link maintenance, and details are not described herein again. It should be noted that the entity for setting the trigger condition in the foregoing triggering method is not limited. In a possible implementation, the trigger condition of the triggering method may be set by the second UE, regardless of whether the sidelink is in a unidirectional V2X transmission state or bidirectional V2X transmission state. The second UE may set the trigger condition of the triggering method for the first UE when establishing an initial connection of the sidelink with the first UE. The setting method is not limited. In an example, the second UE may set the trigger condition by transmitting RRC signaling over the sidelink. In a possible implementation, the trigger condition of the triggering method can be set by a cell that serves the first UE. The specific setting form is not limited. In an example, the cell that serves the first UE sets the trigger condition by using a system message. In an example, the cell that serves the first UE sets the trigger condition for the first UE in connected state by using RRC signaling.

In this way, for UE in direct communication, the method for triggering data transmission link maintenance can help the UE to predict link imbalance that the sidelink may encounter in advance, to trigger the maintenance of the data transmission link in time. The V2X transmission can be ensured whenever possible. Simultaneously, by using the method for data transmission link maintenance, when the trigger condition is met, various maintenance forms between multiple entities can ensure that the V2X transmission can be normally performed whenever possible. In a bidirectional V2X transmission scenario, the triggering method and maintenance method can make the bidirectional V2X transmission continue whenever possible. In a unidirectional V2X transmission scenario, the triggering method and maintenance method can make the UE enters a state of bidirectional V2X transmission as soon as possible if required, and ensure communication requirements of the UE as much as possible.

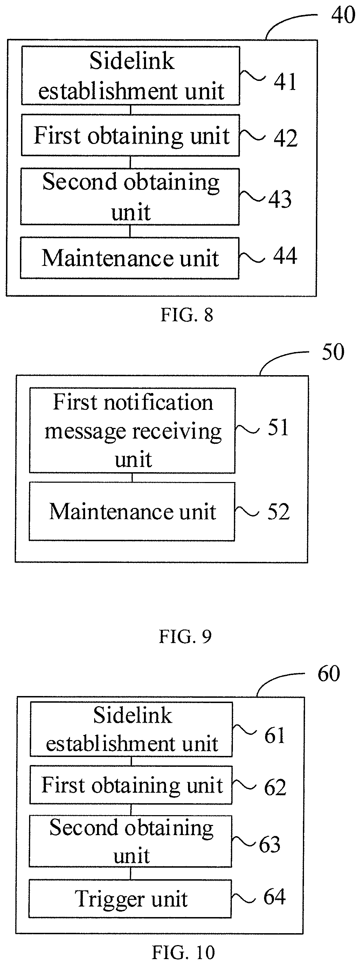

FIG. 8 is a block diagram of an apparatus for data transmission link maintenance according to an embodiment of the present disclosure. As shown in FIG. 8, the apparatus 40 includes the following units:

A sidelink establishment unit 41, configured to establish a sidelink for transmitting V2X service data and perform communication between first UE and second UE over the sidelink.

A first obtaining unit 42, configured to obtain a first pathloss.

A second obtaining unit 43, configured to obtain a second pathloss.

A maintenance unit 44, configured to maintain a V2X transmission link when a relationship between the first pathloss and the second pathloss meets a trigger condition.

In a possible implementation, the maintaining a V2X transmission link when a relationship between the first pathloss and the second pathloss meets a trigger condition may specifically include: maintaining the V2X transmission link when the first pathloss is greater than the second pathloss by a first threshold; or maintaining the V2X transmission link when the first pathloss is less than the second pathloss by a second threshold.

In a possible implementation, the maintenance unit 44 may be specifically configured to: send a first notification message to the second UE, such that the second UE maintains the V2X transmission link based on the first notification message; send a second notification message to a base station that serves the first UE to maintain the V2X transmission link; or adjust a transmission parameter to maintain the V2X transmission link.

In a possible implementation, the maintenance unit 44 may be further configured to: send the second notification message to the base station to request to perform power compensation based on the first pathloss to implement V2X transmission; and when receiving a request approval message, perform power compensation based on the first pathloss to implement V2X transmission; or when receiving a request rejection message, adjust the transmission parameter to maintain the V2X transmission link.

In a possible implementation, the adjusting a transmission parameter to maintain the V2X transmission link may specifically include: adjusting an MCS to maintain the V2X transmission link; sending a feedback message to the second UE to maintain the V2X transmission link; selecting a link at a different carrier frequency to perform V2X transmission with the second UE to maintain the V2X transmission link; or instructing the second UE to release the sidelink.

In a possible implementation, the sending a notification message when a relationship between the first pathloss and the second pathloss meets a trigger condition further may specifically include: sending the notification message when a difference between the first pathloss and the second pathloss reaches a third threshold; or sending the notification message when the difference between the first pathloss and the second pathloss reaches the third threshold and a duration exceeds a fourth threshold.

FIG. 9 is a block diagram of an apparatus for data transmission link maintenance according to an embodiment of the present disclosure. As shown in FIG. 9, the apparatus 50 includes the following units:

A first notification message receiving unit 51, configured to receive a first notification message sent by first UE, the first notification message is sent when a relationship between a first pathloss and a second pathloss meets a trigger condition, and is used to indicate a status of a sidelink for V2X transmission.

A maintenance unit 52, configured to maintain a V2X transmission link based on the first notification message.

In a possible implementation, the maintenance unit 52 may be specifically configured to: perform bidirectional V2X transmission with the first UE over the sidelink if the first notification message indicates that the sidelink supports bidirectional V2X transmission; or maintain the V2X transmission link if the first notification message indicates that the sidelink does not support bidirectional V2X transmission.

FIG. 10 is a block diagram of an apparatus for triggering data transmission link maintenance according to an embodiment of the present disclosure. As shown in FIG. 10, the apparatus 60 includes the following units:

A sidelink establishment unit 61, configured to establish a sidelink for transmitting V2X service data and perform communication between first UE and second UE over the sidelink.

A first obtaining unit 62, configured to obtain a first pathloss.

A second obtaining unit 63, configured to obtain a second pathloss.

A trigger unit 64, configured to trigger maintenance of a V2X transmission link when a relationship between the first pathloss and the second pathloss meets a trigger condition.

In a possible implementation, the trigger unit 64 may be specifically configured to: trigger the maintenance of the V2X transmission link when the first pathloss is greater than the second pathloss by a first threshold; or trigger the maintenance of the V2X transmission link when the first pathloss is less than the second pathloss by a second threshold.

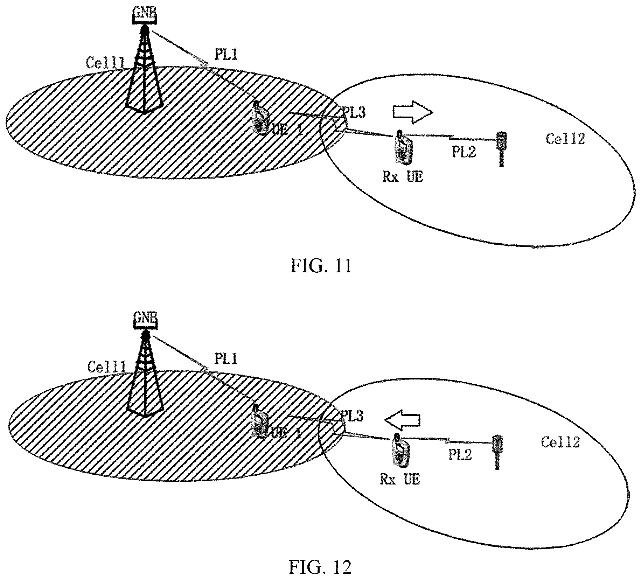

FIG. 11 is a schematic diagram of an application example of the present disclosure. The application example is only for facilitating the understanding of the embodiments of the present disclosure, and does not limit the embodiments of the present disclosure.

As shown in FIG. 11, Rx UE is located in a cell Cell2, UE 1 is located in a cell Cell1, and the Rx UE and the UE 1 are in a bidirectional V2X transmission state. In this case, because a distance between the Rx UE and the UE 1 is relatively short, a relationship between a pathloss PL3 of a sidelink between the Rx UE and the UE 1 and a pathloss PL2 of the cell Cell2 where the Rx UE is located meets the following condition: PL3 < PL2. The Rx UE performs power compensation based on the pathloss PL3. Therefore, the Rx UE can serve as a receiver to receive V2X data sent by the UE 1, and can also serve as a transmitter to send data or feedback data to UE 1, to implement bidirectional V2X transmission. It can be learned from FIG. 11 that when the two UE perform bidirectional V2X transmission, the Rx UE is moving in a direction far away from the UE 1 and close to a base station in the cell Cell2. Because the distance between the Rx UE and the UE 1 and a distance between the Rx UE and the base station in the cell Cell2 may change, the values of PL2 and PL3 may also change accordingly. If the condition PL3 > PL2 is met, the Rx UE may perform power compensation based on PL2. Consequently, data sent by the Rx UE as a sender may not be received by the UE 1, and bidirectional V2X transmission cannot be maintained.

To maintain bidirectional V2X transmission whenever possible, a method for data transmission link maintenance and a method for triggering data transmission link maintenance are introduced in this application example. The Rx UE can continuously measure the values of PL3 and PL2 when the Rx UE is moving. If PL3 is greater than PL2 by a preset offset, the Rx UE triggers maintenance of a V2X transmission link. In this application example, the offset is set to -2 dB. In other words, if PL3 is greater than PL2 by -2 dB, the maintenance of the V2X transmission link is triggered. Currently, PL3 is still less than PL2. However, PL3 is less than PL2 by only 2 dB, and is about to be greater than PL2, and it is likely to be unable to maintain bidirectional V2X transmission.

If the maintenance of the V2X transmission link is triggered, the Rx UE may perform the following operations: the Rx UE may send a notification message to the UE 1 to notify that the current sidelink for bidirectional V2X transmission may no longer be able to support bidirectional transmission. If the Rx UE is in connected state, the Rx UE may send a request to the base station in the cell Cell2 to maintain the bidirectional transmission. The foregoing two operations can be performed separately or simultaneously, and can be flexibly selected based on actual situations.

After the UE 1 receives the notification message sent by the Rx UE, if there is to-be-transmitted data, the UE 1 may obtain transmission resources and transmit the to-be-transmitted data to the Rx UE as soon as possible. Alternatively, the UE 1 may switch to unidirectional transmission without feedback. Alternatively, the UE 1 may release the current PC5 link. Alternatively, if the UE 1 finds that there is another frequency at which the UE 1 can perform V2X transmission with the Rx UE, the UE 1 uses PC5 RRC signaling to notify the Rx UE to switch to the another frequency to continue the V2X transmission. To find that there is the another frequency at which the UE 1 can perform V2X transmission with the Rx UE, the UE 1 may need to detect whether there are transmission resources at the another frequency and whether a sidelink at the another frequency is suitable for V2X transmission.

When the base station receives the request of the Rx UE, the base station may indicate whether the Rx UE is allowed to transmit V2X data by using a pathloss greater than PL2, or the base station may configure dedicated transmission resources for the Rx UE, such that V2X transmission can be performed at higher transmission power.

If the base station rejects the request of the Rx UE, the Rx UE finds it possible to transmit V2X data by using PL3. In this case, the Rx UE may perform the following operations to maintain the V2X transmission link whenever possible:

The Rx UE may adjust an MCS to transmit V2X data. Correspondingly, MCS ranges in different pathloss scenarios can be configured over a network (by using a system message or dedicated signaling) as follows:

PL2 > PL3, MCS-PSSCH-Range1; and
PL2 < PL3, MCS-PSSCH-Range2.

The Rx UE may only send feedback information or SCI to indicate that V2X data transmission cannot be performed.

If there is a sidelink at another carrier frequency between the Rx UE and the UE 1, the Rx UE indicates an issue of the current sidelink to the UE 1 over the sidelink at the another carrier frequency.

The foregoing operations of the Rx UE may be performed after the base station rejects the request of the Rx UE, when the Rx UE sends the message to the UE 1 or the base station, or when the Rx UE maintains the V2X transmission link with the UE 1 or the base station. This is not specifically limited. The operations can be flexibly selected based on actual situations.

By using the foregoing triggering method and maintenance method, the bidirectional V2X transmission between the Rx UE and the UE 1 can be maintained whenever possible, to improve communication stability.

FIG. 12 is a schematic diagram of an application example of the present disclosure. The application example is only for facilitating the understanding of the embodiments of the present disclosure, and does not limit the embodiments of the present disclosure.

As shown in FIG. 12, Rx UE is located in a cell Cell2, and UE 1 is located in a cell Cell1. The Rx UE and the UE 1 are in a unidirectional V2X transmission state. In other words, the UE 1 sends transmission data to the Rx UE, and the Rx UE can receive the transmission data, but cannot send data or feedback data to the UE 1. In this case, because a distance between the Rx UE and the UE 1 is relatively long, a relationship between a pathloss PL3 of a sidelink between the Rx UE and the UE 1 and a pathloss PL2 of the cell Cell2 where the Rx UE is located meets the following condition: PL3 > PL2. The Rx UE performs power compensation based on the pathloss PL2. Therefore, the Rx UE can serve only as a receiver to receive V2X data sent by the UE 1 to implement unidirectional V2X transmission. It can be learned from FIG. 12 that when the two UE perform unidirectional V2X transmission, the Rx UE is moving in a direction close to the UE 1 and far away from a base station in the cell Cell2. Because the distance between the Rx UE and the UE 1 and a distance between the Rx UE and the base station in the cell Cell2 may change, the values of PL2 and PL3 may also change accordingly. If the condition PL3 < PL2 is met, the Rx UE may perform power compensation based on PL3 to enter a bidirectional V2X transmission state.

To enable the Rx UE and the UE 1 to enter the bidirectional V2X transmission state as soon as possible, a method for data transmission link maintenance and a method for triggering data transmission link maintenance are introduced in this application example. The Rx UE can continuously measure the values of PL3 and PL2 when the Rx UE is moving. If PL3 is less than PL2 by a preset offset, the Rx UE triggers maintenance of a V2X transmission link to enter the bidirectional V2X transmission state as soon as possible. In this application example, the offset is set to -3 dB. In other words, if PL3 is less than PL2 by -3 dB, the maintenance of the V2X transmission link is triggered, such that the Rx UE can perform bidirectional V2X transmission with the UE 1 as soon as possible. Currently, PL3 is still greater than PL2. However, PL3 is greater than PL2 by only 3 dB, and is about to be less than PL2. Therefore, if PL3 is less than PL2 by -3 dB, the Rx UE may prepare to transmit V2X data to the UE 1, or send a request to the base station to request the base station to allocate resources for transmitting V2X data to the UE 1.

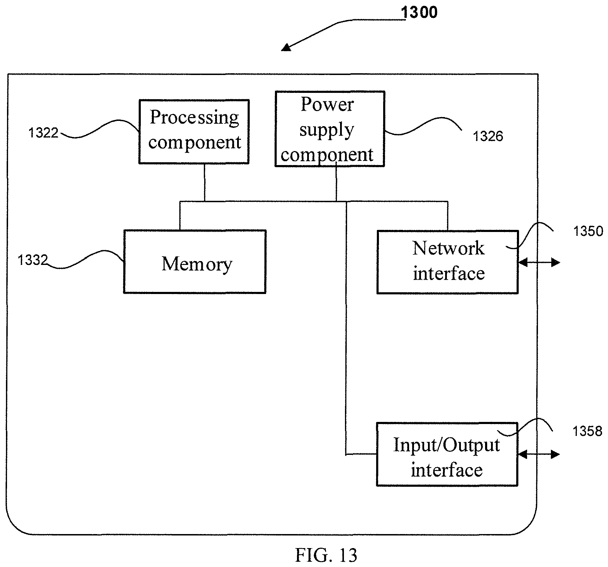

FIG. 13 is a block diagram of an apparatus for data transmission link maintenance 1300 according to an exemplary embodiment. An apparatus for triggering data transmission link maintenance is also provided, and may be included in the apparatus 1300 in FIG. 13. For example, the apparatus 1300 may be provided as a server. Referring to FIG. 13, the apparatus 1300 includes a processing component 1322, which further includes one or more processors; and a memory resource represented by a memory 1332, for storing instructions executable by the processing component 1322, such as an application program. The application program stored in the memory 1332 may include one or more modules each corresponding to a set of instructions. In addition, the processing component 1322 is configured to execute the instructions to perform the foregoing method.

The apparatus 1300 may further include a power supply component 1326 configured to perform power management of the apparatus 1300, a wired or wireless network interface 1350 configured to connect the apparatus 1300 to a network, and an input/output (I/O) interface 1358. The apparatus 1300 can operate based on an operating system stored in the memory 1332, such as Windows ServerTM, Mac OS XTM, UnixTM, LinuxTM, FreeBSDTM, or the like.

In an exemplary embodiment, a non-volatile computer-readable storage medium is provided. For example, the storage medium includes the memory 1332 including a computer program instruction. The computer program instruction can be executed by the processing component 1322 of the apparatus 1300 to perform the foregoing method.

The present disclosure may be a system, method, and/or computer program product. The computer program product may include a computer-readable storage medium storing a computer-readable program instruction for enabling a processor to implement various aspects of the present disclosure.

The computer-readable storage medium may be a tangible device that can hold and store an instruction used by an instruction execution device. The computer-readable storage medium may be, for example, but not limited to, an electrical storage device, a magnetic storage device, an optical storage device, an electromagnetic storage device, a semiconductor storage device, or any suitable combination of the foregoing devices. More specific examples (non-exhaustive list) of the computer-readable storage medium include: a portable computer disk, a hard disk, a random access memory (RAM), a read-only memory (ROM), an erasable programmable ROM (EPROM), a flash memory, a static RAM (SRAM), a compact disc ROM (CD-ROM), a digital versatile disc (DVD), a memory stick, a floppy disk, and a mechanical encoding device such as a protruding structure that stores an instruction in a hole card or a groove, and any suitable combination of the foregoing. The computer-readable storage medium herein is not interpreted as a transient signal, such as radio waves or other freely propagating electromagnetic waves, electromagnetic waves propagating through waveguides or other transmission media, such as light pulses through fiber optic cables, or electrical signals propagating through wires.

The computer-readable program instruction described herein can be downloaded from the computer-readable storage medium to various computing/processing devices, or downloaded to an external computer or external storage device over a network, such as the Internet, a local area network, a wide area network, and/or a wireless network. The network may include a copper transmission cable, optical fiber transmission, wireless transmission, a router, a firewall, a switch, a gateway computer, and/or an edge server. The network adapter card or network interface in each computing/processing device receives the computer-readable program instruction from the network, and forwards the computer-readable program instruction for storage in the computer-readable storage medium in each computing/processing device.

The computer program instruction used to perform the operations of the present disclosure may be an assembly instructions, an instruction set architecture (ISA) instruction, a machine instruction, a machine-related instruction, microcode, a firmware instruction, a state setting data, or source code or target code written in any combination of one or more programming languages. The programming languages include object-oriented programming languages such as Smalltalk and C++, and conventional procedural programming languages such as C language or similar programming languages. The computer-readable program instruction can be executed fully on a user computer, executed partially on a user computer, executed as an independent software package, executed partially on a user computer and partially on a remote computer, or executed fully on a remote computer or a server. In a circumstance in which a remote computer is involved, the remote computer may be connected to a user computer over any type of network, including a local area network or a wide area network, or may be connected to an external computer (for example, connected over the Internet by using an Internet service provider). In some embodiments, an electronic circuit, such as a programmable logic circuit, a field programmable gate array (FPGA), or a programmable logic array (PLA), can be customized by using status information of the computer-readable program instruction. The computer-readable program instruction is executed to implement various aspects of the present disclosure.

Various aspects of the present disclosure are described with reference to flowcharts and/or block diagrams of methods, devices (systems), and computer program products according to embodiments of the present disclosure. It should be understood that each block of the flowcharts and/or block diagrams, and combinations of blocks in the flowcharts and/or block diagrams, can be implemented by computer-readable program instructions.

The computer-readable program instructions can be provided to a processor of a general-purpose computer, a dedicated computer, or other programmable data processing device, to produce a machine that makes the instruction when executed by the processor of the computer or other programmable data processing devices to implement the functions/actions specified in one or more blocks in the flowcharts and/or block diagrams. The computer-readable program instructions may be stored in a computer-readable storage medium. These instructions make computers, programmable data processing apparatuses, and/or other devices work in a specific manner. The computer-readable medium storing the instructions includes an artifact, which includes instructions for implementing various aspects of the functions/actions specified in one or more blocks in the flowcharts and/or block diagrams.

The computer-readable program instructions may be loaded onto a computer, another programmable data processing apparatus, or another device, such that a series of steps are executed on the computer, another programmable data processing apparatus, or another equipment to produce a computer-implemented process. In this way, the instructions executed on the computer, another programmable data processing apparatus, or another device implement the functions/actions specified in one or more blocks in the flowcharts and/or block diagrams.

The flowcharts and block diagrams in the accompanying drawings illustrate system architectures, functions and operations that may be implemented by the system, method, and computer program product according to the embodiments of the present disclosure. Each block in the flowcharts or block diagrams may represent a module, a program segment, or a part of code, and the module, the program segment, or the part of code contains one or more executable instructions used to implement specified logical functions. It should also be noted that, in some alternative implementations, functions marked in the blocks may also take place in an order different from the order marked in the accompanying drawings. For example, two consecutive blocks can actually be executed in parallel, or sometimes can be executed in the reverse order, depending on the functions involved. It should also be noted that each block in the flowcharts and/or block diagrams and combinations of the blocks in the flowcharts and/or block diagrams may be implemented by a dedicated hardware-based system for executing specified functions or operations, or may be implemented by a combination of dedicated hardware and computer instructions.

The embodiments of the present disclosure have been described above, and the above description is exemplary, not exhaustive, and is not limited to the disclosed embodiments. It is apparent to those skilled in the art that many modifications and changes may be made without departing from the scope and spirit of the described embodiments. The terms used herein are selected to best explain principles of the examples, practical applications, or improvements to technologies in the market, or to enable other persons of ordinary skill in the art to understand the embodiments disclosed herein.

The embodiments of the present disclosure have been described above, and the above description is exemplary, not exhaustive, and is not limited to the disclosed embodiments. It is apparent to those skilled in the art that many modifications and changes may be made without departing from the scope and spirit of the described embodiments. The terms used herein are selected to best explain principles of the examples, practical applications, or improvements to technologies in the market, or to enable other persons of ordinary skill in the art to understand the embodiments disclosed herein.

**Claims**

1.  A method for data transmission link maintenance, comprising:

    Establishing a sidelink for transmitting vehicle-to-everything, V2X, service data, and performing communication between a first user equipment, UE, and a second UE over the sidelink;
    obtaining a first pathloss;
    obtaining a second pathloss; and
    maintaining a V2X transmission link in response to a relationship between the first pathloss and the second pathloss meeting a trigger condition.

2.  The method for data transmission link maintenance according to claim 1, wherein said maintaining a V2X transmission link in response to a relationship between the first pathloss and the second pathloss meeting a trigger condition comprises:

    maintaining the V2X transmission link in response to the first pathloss being greater than the second pathloss by a first threshold; or
    maintaining the V2X transmission link in response to the first pathloss being less than the second pathloss by a second threshold.

3.  The method for data transmission link maintenance according to claim 1, wherein said maintaining a V2X transmission link comprises:

    sending a first notification message to the second UE, such that the second UE maintains the V2X transmission link based on the first notification message; or
    sending a second notification message to a base station serving the first UE to maintain the V2X transmission link; or
    adjusting transmission parameters to maintain the V2X transmission link.

4.  The method for data transmission link maintenance according to claim 3, wherein said sending a second notification message to a base station serving the first UE to maintain the V2X transmission link comprises:

    sending the second notification message to the base station to request to perform power compensation based on the first pathloss to implement V2X transmission; and
    in response to receiving a request approval message, performing power compensation based on the first pathloss to implement V2X transmission; or
    in response to receiving a request rejection message, adjusting the transmission parameters to maintain the V2X transmission link.

5.  The method for data transmission link maintenance according to claim 3 or 4, wherein said adjusting a transmission parameter to maintain the V2X transmission link comprises:

    adjusting a modulation and coding scheme, MCS, to maintain the V2X transmission link; or
    sending a feedback message to the second UE to maintain the V2X transmission link; or
    selecting a link at a different carrier frequency to perform V2X transmission with the second UE to maintain the V2X transmission link; or
    instructing the second UE to release the sidelink.

6.  The method for data transmission link maintenance according to claim 5, wherein said adjusting an MCS to maintain the V2X transmission link comprises:
    configuring a range of the MCS based on the relationship between the first pathloss and the second pathloss.

7.  The data transmission link maintenance method according to claim 5, wherein said sending a feedback message to the second UE to maintain the V2X transmission link comprises:

    sending a sidelink feedback message to the second UE to maintain the V2X transmission link, wherein the sidelink feedback message is configured to indicate a status of the sidelink; or
    sending sidelink control information (SCI) to the second UE to maintain the V2X transmission link, wherein the SCI is configured to indicate a status of the sidelink.

8. The method for data transmission link maintenance according to claim 1, wherein said sending a notification message in response to a relationship between the first pathloss and the second pathloss meeting a trigger condition further comprises:

sending the notification message in response to a difference between the first pathloss and the second pathloss reaching a third threshold; or
sending the notification message in response to the difference between the first pathloss and the second pathloss reaching the third threshold and a duration exceeds a fourth threshold.

9. A method for data transmission link maintenance, applied to a second UE supporting bidirectional V2X transmission, comprising:

receiving a first notification message sent by a first UE, wherein the first notification message is sent in response to a relationship between a first pathloss and a second pathloss meeting a trigger condition, and the first notification message is configured to indicate a status of a sidelink for V2X transmission; and
maintaining a V2X transmission link based on the first notification message.

10. The method for data transmission link maintenance according to claim 9, wherein said maintaining a V2X transmission link based on the first notification message comprises:

performing bidirectional V2X transmission with the first UE over the sidelink in a case that the first notification message indicates that the sidelink supports bidirectional V2X transmission; or
maintaining the V2X transmission link in a case that the first notification message indicates that the sidelink does not support bidirectional V2X transmission.

11. The method for data transmission link maintenance according to claim 10, wherein said maintaining the V2X transmission link in a case that the first notification message indicates that the sidelink does not support bidirectional V2X transmission comprises:

sending to-be-transmitted data to the first UE immediately after receiving the first notification message; or
entering a transmission state of unidirectional V2X transmission to the first UE after receiving the first notification message; or
releasing the sidelink after receiving the first notification message; or
switching to a link at a different carrier frequency to perform bidirectional V2X transmission with the first UE after receiving the first notification message.

12. A data transmission link maintenance triggering method, comprising:

establishing a sidelink for transmitting V2X service data, and performing communication between a first UE and a second UE over the sidelink;
obtaining a first pathloss;
obtaining a second pathloss; and
triggering maintenance of a V2X transmission link under a condition that a relationship between the first pathloss and the second pathloss meets a trigger condition.

13. The data transmission link maintenance triggering method according to claim 12, wherein said triggering maintenance of a V2X transmission link under a condition that a relationship between the first pathloss and the second pathloss meets a trigger condition comprises:

triggering the maintenance of the V2X transmission link under a condition that the first pathloss is greater than the second pathloss by a first threshold; or
triggering the maintenance of the V2X transmission link under a condition that the first pathloss is less than the second pathloss by a second threshold.

14. An apparatus for data transmission link maintenance, comprising:

a sidelink establishment unit, configured to establish a sidelink for transmitting V2X service data and perform communication between first UE and second UE over the sidelink;
a first obtaining unit, configured to obtain a first pathloss;
a second obtaining unit, configured to obtain a second pathloss; and
a maintenance unit, configured to maintain a V2X transmission link in response to a relationship between the first pathloss and the second pathloss meeting a trigger condition.

15. The apparatus for data transmission link maintenance according to claim 14, wherein said maintaining a V2X transmission link in response to a relationship between the first pathloss and the second pathloss meeting a trigger condition comprises:

maintain the V2X transmission link in response to the first pathloss being greater than the second pathloss by a first threshold; or
maintain the V2X transmission link in response to the first pathloss being less than the second pathloss by a second threshold.

16. The data transmission link maintenance apparatus according to claim 14, wherein the maintenance unit is configured to:

send a first notification message to the second UE, such that the second UE maintains the V2X transmission link based on the first notification message; or
send a second notification message to a base station serving the first UE to maintain the V2X transmission link; or
adjust transmission parameters to maintain the V2X transmission link.

17. The data transmission link maintenance apparatus according to claim 16, wherein said maintenance unit is further configured to:

send the second notification message to the base station to request to perform power compensation based on the first pathloss to implement V2X transmission;
in response to receiving a request approval message, perform power compensation based on the first pathloss to implement V2X transmission; and
in response to receiving a request rejection message, adjust the transmission parameter to maintain the V2X transmission link.

18. The apparatus for data transmission link maintenance according to claim 16 or 17, wherein said adjusting a transmission parameter to maintain the V2X transmission link comprises:

adjusting a modulation and coding scheme, MCS, to maintain the V2X transmission link; or
sending a feedback message to the second UE to maintain the V2X transmission link; or
selecting a link at a different carrier frequency to perform V2X transmission with the second UE to maintain the V2X transmission link; or
instructing the second UE to release the sidelink.

19. The apparatus for data transmission link maintenance according to claim 14, wherein said sending a notification message in response to a relationship between the first pathloss and the second pathloss meeting a trigger condition further comprises:

sending the notification message in response to a difference between the first pathloss and the second pathloss reaching a third threshold; or
sending the notification message in response to the difference between the first pathloss and the second pathloss reaching the third threshold and a duration exceeds a fourth threshold.

20. A data transmission link maintenance apparatus, comprising:

a first notification message receiving unit, configured to receive a first notification message sent by a first UE, wherein the first notification message is sent in response to a relationship between a first pathloss and a second pathloss meeting a trigger condition, and the first notification message is configured to indicate a status of a sidelink for V2X transmission; and

a maintenance unit, configured to maintain a V2X transmission link based on the first notification message.

21. The data transmission link maintenance apparatus according to claim 20, wherein said maintenance unit is configured to:

perform bidirectional V2X transmission with the first UE over the sidelink in a case that the first notification message indicates that the sidelink supports bidirectional V2X transmission; and
maintain the V2X transmission link in a case that the first notification message indicates that the sidelink does not support bidirectional V2X transmission.

22. A data transmission link maintenance triggering apparatus, comprising:

a sidelink establishment unit, configured to establish a sidelink for transmitting V2X service data and perform communication between a first UE and a second UE over the sidelink;
a first obtaining unit, configured to obtain a first pathloss;
a second obtaining unit, configured to obtain a second pathloss; and
a trigger unit, configured to trigger maintenance of a V2X transmission link in response to a relationship between the first pathloss and the second pathloss meeting a trigger condition.

23. The data transmission link maintenance triggering apparatus according to claim 22, wherein the trigger unit is configured to:

trigger the maintenance of the V2X transmission link in response to the first pathloss being greater than the second pathloss by a first threshold; or
trigger the maintenance of the V2X transmission link in response to the first pathloss being less than the second pathloss by a second threshold.

24. A data transmission link maintenance apparatus, comprising:

a processor; and
a memory configured to store instructions executable by the processor;
wherein the processor is configured to perform the method according to any one of claims 1 to 8.

25. A data transmission link maintenance apparatus, comprising:

a processor; and
a memory configured to store instructions executable by the processor;
wherein the processor is configured to perform the method according to any one of claims 9 to 11.

26. A data transmission link maintenance triggering apparatus, comprising:

a processor; and
a memory configured to store instructions executable by the processor;
wherein the processor is configured to perform the method according to any one of claims 12 and 13.

27. A non-transitory computer-readable storage medium storing computer program instructions, wherein when being executed by a processor, the method according to any one of claims 1 to 8 is implemented.

28. A non-transitory computer-readable storage medium storing computer program instructions, wherein when being executed by a processor, the method according to any one of claims 9 to 11 is implemented.

29. A non-transitory computer-readable storage medium storing computer program instructions, wherein when being executed by a processor, the method according to any one of claims 12 and 13 is implemented.

FIG. 1

FIG. 2

FIG. 3

S21

Receive a first notification message sent by a first UE, the first notification message is sent when a relationship between a first pathloss and a second pathloss meets a trigger condition, and is configured to indicate a status of a sidelink for V2X transmission

S22

Maintain a V2X transmission link based on the first notification message

FIG. 4

S221

Perform bidirectional V2X transmission with a first UE over a sidelink in a case that a first notification message indicates that the sidelink supports bidirectional V2X transmission

S222

Maintain a V2X transmission link in a case that the first notification message indicates that the sidelink does not support bidirectional V2X transmission

FIG. 5

S1421

Send a second notification message to a base station that serves a first UE to request to perform power compensation based on a first pathloss to implement V2X transmission

S1422

When receiving a request approval message, perform power compensation based on the first pathloss to implement V2X transmission

S1423

When receiving a request rejection message, adjust a transmission parameter to maintain a V2X transmission link

FIG. 6

S31

Establish a sidelink for transmitting V2X service data and perform communication between a first UE and a second UE over the sidelink

S32

Obtain a first pathloss, the first pathloss includes a pathloss of the sidelink

S33

Obtain a second pathloss, the second pathloss includes a pathloss of a cell that serves the first UE

S34

Trigger maintenance of a V2X transmission link when a relationship between the first pathloss and the second pathloss meets a trigger condition

FIG. 7

40

| Sidelink establishment unit | ~ 41 |
| First obtaining unit | ~ 42 |
| Second obtaining unit | ~43 |
| Maintenance unit | ~ 44 |

FIG. 8

50

| First notification message receiving unit | ~ 51 |
| Maintenance unit | ~ 52 |

FIG. 9

60

| Sidelink establishment unit | ~ 61 |
| First obtaining unit | ~ 62 |
| Second obtaining unit | ~63 |
| Trigger unit | ~ 64 |

FIG. 10

FIG. 11

FIG. 12

**1300**

```
              Processing        Power
              component         supply
1322                           component         1326
                                 │
          │                      │
                                 │
                    │            │            │
1332     │       Memory       │         │    Network      │ 1350
         │                    │         │    interface    │ ↔
                              │
                              │
                              │       Input/Output        1358
                              │        interface          ↔
```

FIG. 13

## INTERNATIONAL SEARCH REPORT

| International application No. |
| --- |
| **PCT/CN2020/070251** |

**A. CLASSIFICATION OF SUBJECT MATTER**

H04W 4/44(2018.01)i

According to International Patent Classification (IPC) or to both national classification and IPC

**B. FIELDS SEARCHED**

Minimum documentation searched (classification system followed by classification symbols)

H04W; H04Q

Documentation searched other than minimum documentation to the extent that such documents are included in the fields searched

Electronic data base consulted during the international search (name of data base and, where practicable, search terms used)

CNPAT; CNKI; WPI; EPODOC; IEEE; 3GPP: V2X, V2V, D2D, 路损, 路径损耗, 功率, 第一, 第二, 链路, 维护, 调整, pathloss, power, first, second, link, adjust+

**C. DOCUMENTS CONSIDERED TO BE RELEVANT**

| Category* | Citation of document, with indication, where appropriate, of the relevant passages | Relevant to claim No. |
| --- | --- | --- |
| X | CN 104205954 A (HUAWEI TECHNOLOGIES CO., LTD.) 10 December 2014 (2014-12-10) description, paragraphs 5, 7-12, figures 1a-8 | 1-29 |
| A | CN 104335647 A (QUALCOMM INC.) 04 February 2015 (2015-02-04) entire document | 1-29 |
| A | CN 105323839 A (YULONG COMPUTER TELECOMMUNICATION SCIENTIFIC (SHENZHEN) CO., LTD.) 10 February 2016 (2016-02-10) entire document | 1-29 |
| A | CN 108632973 A (NOKIA SHANGHAI BELL CO., LTD. et al.) 09 October 2018 (2018-10-09) entire document | 1-29 |
| A | WO 2016134755 A1 (HUAWEI TECHNOLOGIES CO., LTD.) 01 September 2016 (2016-09-01) entire document | 1-29 |

☐ Further documents are listed in the continuation of Box C.    ☑ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **08 March 2020** | **30 March 2020** |

| Name and mailing address of the ISA/CN | Authorized officer |
| --- | --- |
| **China National Intellectual Property Administration (ISA/ CN)**<br>**No. 6, Xitucheng Road, Jimenqiao Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2020/070251**

| Patent document cited in search report | | | Publication date (day/month/year) | Patent family member(s) | | | Publication date (day/month/year) |
|---|---|---|---|---|---|---|---|
| CN | 104205954 | A | 10 December 2014 | EP | 2820898 | A1 | 07 January 2015 |
| | | | | WO | 2013139233 | A1 | 26 September 2013 |
| | | | | EP | 3099120 | A1 | 30 November 2016 |
| | | | | US | 2016227488 | A1 | 04 August 2016 |
| | | | | US | 2017111870 | A1 | 20 April 2017 |
| | | | | US | 2013244715 | A1 | 19 September 2013 |
| CN | 104335647 | A | 04 February 2015 | JP | 2015517778 | A | 22 June 2015 |
| | | | | WO | 2013177177 | A1 | 28 November 2013 |
| | | | | US | 2013310103 | A1 | 21 November 2013 |
| | | | | EP | 2853121 | A1 | 01 April 2015 |
| | | | | IN | 201407654 | P4 | 01 July 2016 |
| CN | 105323839 | A | 10 February 2016 | None | | | |
| CN | 108632973 | A | 09 October 2018 | None | | | |
| WO | 2016134755 | A1 | 01 September 2016 | EP | 3262869 | A1 | 03 January 2018 |
| | | | | CN | 107408994 | A | 28 November 2017 |
| | | | | US | 2017353250 | A1 | 07 December 2017 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201910008487